Europäisches Patentamt

European Patent Office

Office européen des brevets

(19)

(11) Veröffentlichungsnummer: **0 243 602
B1**

(12) **EUROPÄISCHE PATENTSCHRIFT**

(45) Veröffentlichungstag der Patentschrift:
20.12.89

(21) Anmeldenummer: 87102591.2

(22) Anmeldetag: 24.02.87

(51) Int. Cl.⁴: **H01C 7/10**, H01C 1/14, H01C 1/144, H01G 1/14

(54) **Elektrisches Bauelement mit hoher Festigkeit bei Beanspruchung durch Temperaturwechsel und durch Stossströme, insbesondere ein Varistor.**

(30) Priorität: 23.04.86 DE 3613787

(43) Veröffentlichungstag der Anmeldung:
04.11.87 Patentblatt 87/45

(45) Bekanntmachung des Hinweises auf die Patenterteilung:
20.12.89 Patentblatt 89/51

(84) Benannte Vertragsstaaten:
AT CH DE FR GB IT LI NL SE

(56) Entgegenhaltungen:
DE-U- 8 506 668
FR-A- 896 326
FR-A- 2 377 107
US-A- 3 793 604

(73) Patentinhaber: Siemens Aktiengesellschaft,
Wittelsbacherplatz 2, D-8000 München 2(DE)

(84) Benannte Vertragsstaaten: CH DE FR GB IT LI NL SE

(73) Patentinhaber: Siemens Bauelemente OHG,
Siemensstrasse 43, A-8530 Deutschlandsberg(AT)

(84) Benannte Vertragsstaaten: AT

(72) Erfinder: Schwingenschuh, Martin, Dipl.-Ing., Am
Eisbach 13, A-8055 Graz(AT)
Erfinder: Meschan, Franz, Grafendorf 43,
A-8510 Stainz(AT)
Erfinder: Ribitsch, Gert, Dipl.-Ing., Rudolfstrasse 23,
A-8010 Graz(AT)

## Beschreibung

Die Erfindung betrifft ein elektrisches Bauelement mit hoher Festigkeit bei Beanspruchung durch Temperaturwechsel und durch Stoßströme, das aus einem keramisch hergestellten, gesinterten Körper mit kreisrundem, rechteckigem oder quadratischem Querschnitt besteht, insbesondere ein spannungsabhängiger elektrischer Widerstand (Varistor) aus durch Dotierung halbleitendem Zinkoxid-Material, dessen Stirnflächen nicht bis zu seiner Umfangsfläche reichende lötfähige Belegungen als Elektroden enthalten, an denen ringförmige Stromzuführungselemente mittig angelötet sind.

Ein elektrisches Bauelement, nämlich ein elektrischer Widerstand mit negativem Temperaturkoeffizienten seines Widerstandes (NTC-Widerstand) mit den oben angegebenen Merkmalen, bei dem jedoch besonders geringe Abmessungen vorliegen sollen, nämlich ein Durchmesser von 1,5 mm bis 5 mm und eine Dicke von 0,6 mm bis 2,5 mm, ist in dem am 10.04.1986 eingetragenen, jedoch erst am 22.05.1986 veröffentlichten deutschen Gebrauchsmuster 85 06 668 beschrieben, das weitgehend der EP-A 0 193 854 entspricht. Bei diesem NTC-Widerstand sind die Stromzuführungselemente an ihrem einen Ende ringförmig als weitgehend geschlossene Öse ausgebildet, deren Außendurchmesser höchstens 60 % des Durchmessers der Belegungen der Scheibe beträgt und die ringförmige Öse jedes Stromzuführungselementes mittig auf den Belegungen festgelötet ist, wobei das Lot die Öse umschließt, die Ausdehnung des Lotes auf den Bereich der Öse beschränkt ist und die Randbereiche der Belegungen vom Lot nicht bedeckt sind.

Durch diese Ausführungsform wird für NTC-Widerstände mit besonders kleinen Abmessungen die Aufgabe gelöst, einen Anschlußwiderstand der an den lötfähigen metallischen Belegungen angelöteten Stromzuführungselemente bei einer Temperaturschockbeanspruchung von 100-fachem Wechsel zwischen -60°C und +360°C, vorzugsweise -36°C bis +130°C, mit einer Drift von weniger als 1 % zu gewährleisten und dabei eine stabile Halterung der Keramikscheibe durch die sie tragenden Stromzuführungselemente herzustellen.

Der in dem genannten DE-GM 85 06 668 ausführlich behandelte Stand der Technik, insbesondere die DE-OS 1947799 und die US-PSen 2606955 und 2686244, ist zur Lösung dieser Aufgabe nicht geeignet, wie dort im einzelnen ausgeführt ist. Ein elektrisches Bauelement auf Basis eines keramischen Körpers mit kreisringförmigen Stromumführungselementen ist außerdem aus der FR-A 896 326 bekannt.

Bei elektrischen Bauelementen mit einem keramisch hergestellten Körper beispielsweise aus Keramikmaterial mit positiven Temperaturkoeffizienten (PTC-Widerstände) oder mit negativem Temperaturkoeffizienten (NTC-Widerstände), aber auch bei elektrischen Kondensatoren mit einem keramischen Körper aus dielektrisch wirksamem Material und insbesondere bei spannungsabhängigen elektrischen Widerständen (Varistoren bzw. VDR-Widerstände) tritt aber nicht nur das Problem der ausreichenden Festigkeit gegen Temperaturwechselbeanspruchungen auf, wobei eine Vielzahl kurzzeitiger Temperaturwechsel zwischen hohen Temperaturen, z.B. 360°C und höher und tiefen Temperaturen, beispielsweise -40°C und tiefer, z.B. bis -55°C, indem der unterschiedliche Ausdehnungskoeffizient der Stromzuführungselemente einerseits und des Keramikkörpers andererseits mechanische Spannungen verursacht, die bei Überschreitung der maximalen Bruchspannung zu Rissen im Keramikkörper oder sogar zum Zerstören desselben führen, sondern die hier in Rede stehenden elektrischen Bauelemente müssen auch eine hohe Festigkeit gegenüber Stromstoßbelastung haben.

Es können z.B. bei Kombinationselementen aus einem oder mehreren PTC-Widerständen (Kaltleiter) und wenigstens einem Varistor Stoßstrombelastungen bis etwa 2000 A auftreten. Bei NTC-Widerständen für Anlaßzwecke (Anlaßheißleiter) treten Stoßbelastungen mit Strömen von einigen 100 A auf. Ähnliche Werte können auch bei keramischen Kondensatoren auftreten.

Besonders hohen Stoßstrombelastungen unterliegen Varistoren, die Stoßstrombelastungen mit Strömen von $10^3$ bis $10^5$ A aushalten müssen.

Die hier in Rede stehenden elektrischen Bauelemente, insbesondere die Varistoren, sind dünne Scheiben mit einer Dicke von 0,7 bis 2 mm, dicke Scheiben mit einer Dicke von 10 bis 30 mm und Scheiben mit einer dazwischenliegenden Dicke. Der Durchmesser, insbesondere von Varistoren, liegt in der Größenordnung von 30 bis 80 mm.

Die keramischen Körper dieser Bauelemente weisen an ihren gegenüberliegenden Stirnflächen meist aus Einbrennsilber bestehende Elektroden auf, die in an sich bekannter Weise auf den keramischen Körper nach seiner Herstellung aufgetragen und später bei Temperaturen zwischen 600 und 800°C eingebrannt werden.

Zur Lösung des Problems der Festigkeit gegenüber Temperaturwechselbeanspruchungen wäre es am günstigsten, die Stromzuführungselemente punktförmig an diese Belegungen anzulöten, weil dann bei der Temperaturwechselbeanspruchung auftretende mechanische Spannungen auf den keramischen Körper keine Auswirkungen haben.

Die Ausführung von punktförmig angelöteten Stromzuführungsdrähten ist aber für die Stoßstromfestigkeit praktisch nicht realisierbar. Es wäre notwendig, großflächige, gut leitende Elektroden an die Belegungen anzulöten, um eine gleichmäßige Stromverteilung zu erreichen. Beim Überschreiten eines minimalen Radius des Stromzuführungselementes steigt die Stromdichte an seinem Rand über die maximale Stromdichte an, und es kommt an dieser Stelle zum Schmelzen bzw. zum Verdampfen des Metalls der Belegung des Bauelementes. Die maximale Stromdichte hängt damit auch von der Stromtragfähigkeit der Metallisierungsschicht ab. Als Metalle für die Stromzuführungselemente werden üblicherweise Kupfer oder Messing verwendet, die selbst lötfähig sind und mit den metallischen Belegungen des elektrischen Bauelementes verlötet werden können.

Bis zu einem Durchmesser der metallischen Belegungen auf den Stirnseiten des elektrischen Bauelementes, insbesondere des Varistors, von etwa 25 mm bleibt die mechanische Spannung bei Abkühlung auf -40°C noch unter der Bruchspannung des Keramikkörpers. Bei größeren Durchmessern oder größeren Flächen der metallischen Belegungen beginnt die Keramik einzureißen. Dies tritt vor allem bei dünnen Keramikscheiben auf (z.B. 0,7 bis 2 mm). Der gegenwärtig im Handel befindliche einzige Varistor dieser Größe hat einen Durchmesser von 60 mm, jedoch liegt die Dicke dieser Scheiben bei 5 mm. Diese Scheiben sind durch Anlöten von Stromzuführungselementen an den Belegungen kontaktiert. Bei dünnen Scheiben, insbesondere bei Varistoren, ist eine ausreichende Festigkeit gegenüber Temperaturwechselbeanspruchung nicht mehr gewährleistet.

Der vorliegenden Erfindung liegt die Aufgabe zugrunde, ein elektrisches Bauelement der eingangs angegebenen Art, insbesondere einen Varistor, anzugeben, der mit Stromzuführungselementen versehen ist, die eine hohe Beständigkeit gegenüber Temperaturwechselbeanspruchungen als auch gegenüber Beanspruchungen durch Stromstöße gewährleisten. Die hier in Rede stehenden Bauelemente sollen bei kreisrundem Quer-schnitt einen Durchmesser von wenigstens 30 mm, bei quadratischem oder rechteckigem Querschnitt eine Mindestbreite von 30 mm aufweisen; es sollen sowohl dünne (0,7 bis 2 mm) und mittlere, als auch dicke (10 mm bis 30 mm) Keramikkörper in der angegebenen Weise kontaktiert sein.

Zur Lösung dieser Aufgabe ist das elektrische Bauelement der eingangs angegebenen Art erfindungsgemäß dadurch gekennzeichnet, daß jedes Stromzuführungselement aus einem geschlossenen Streifen besteht, der auf der Belegung eine außerhalb liegende Fläche und eine innerhalb liegende Fläche freiläßt, aus lötfähigem Metall besteht, eine Dicke von 0,2 bis 1 mm aufweist und dessen Breite so bemessen ist, daß die Bedingung Fa : Fi = Ua : Ui = 1,05 bis 1,35 erfüllt ist, wobei
Fa die außerhalb des Stromzuführungselementes befindliche Fläche der Belegung,
Fi die innerhalb des Stromzuführungselementes befindliche Fläche der Belegung,
Ua den äußeren Umfang des Stromzuführungselementes und
Ui den inneren Umfang des Stromzuführungselementes bedeuten,
und daß jedes Stromzuführungselement mit einer Zuleitungslasche versehen ist, die durch Abknickungen am äußeren Umfang des Stromzuführungselementes von der Oberfläche der Belegung einen Freiraum bildend so weit abgehoben ist, daß sie an der Belegung nicht angelötet ist.

Die Erfindung bietet folgende Vorteile.

Durch die aus dem angegebenen Verhältnis resultierende geringe Breite und durch die angegebene geringe Dicke der Stromzuführungselemente wird die Zugspannung bei Temperaturwechselbeanspruchung soweit vermindert, daß Risse und Zerstörungen am Keramikkörper nicht auftreten.

Der ohm'sche Spannungsabfall an den Stromzuführungselementen ist kleiner als 1 % der am Varistor abfallenden Spannung. Es wurde mit einem Normstromstoß von 8/20 µs gemessen, gemäß Norm 7EC 60-2 von 1973.

Durch das angegebene Verhältnis zwischen äußerer Fläche Fa und innerer Fläche Fi bzw. des äußeren Umfanges Ua und des inneren Umfanges Ui ist nicht nur für eine geringe mechanische Spannungsbelastung bei Temperaturwechselbeanspruchung, sondern auch für eine ausreichende Verteilung der elektrischen Spannung gesorgt, weil am äußeren und am inneren Rand des Stromzuführungselementes gleich große Dichten der Stromlinien auftreten.

Dadurch, daß die Zuleitungslasche von der Oberfläche der Belegung soweit abgehoben ist, daß ein Freiraum gebildet wird und deshalb die Lasche an der Belegung nicht angelötet ist, wird gewährleistet, daß die durch die Stromzuführung gegebenen Verhältnisse nicht gestört werden.

Das Anlöten der Stromzuführungselemente an die metallischen Belegungen der keramischen Körper kann durch das an sich bekannte Schwallötverfahren, gegebenenfalls auch durch Tauchlötung erfolgen, weil durch die besondere Bemessung der Stromzuführungselemente es nicht nötig ist, die Ausdehnung des Lotes nur auf den Bereich der Stromzuführungselemente zu beschränken. Im Gegenteil, durch einen Lötvorgang, bei dem nicht nur Stromzuführungselemente an die metallischen Belegungen angelötet werden, sondern auch die gesamte Fläche der metallischen Belegungen mit Lot in dünner Schicht überzogen wird, wird erreicht, daß eine noch günstigere Stromverteilung bei Stromstoßbelastung vorliegt.

Bevorzugte Ausführungsformen der Erfindung bestehen darin, daß das Verhältnis Fa : Fi = Ua : Ui = 1,1 bis 1,2 beträgt, daß bei einem kreisrunden Körper die Stromzuführungselemente kreisringförmig sind, daß bei einem Körper mit rechteckigem oder quadratischem Querschnitt die Stromzuführungselemente als rechteckiger oder quadratischer Rahmen ausgebildet sind, daß die Stromzuführungselemente aus einem nicht lötfähigem Metall bestehen und mit einem lötfähigen Überzug versehen sind und daß die Stromzuführungselemente mit den Stromzuführungslaschen einstückig aus einem entsprechenden Blech ausgestanzt sind.

Beispiel:

Bei einem Durchmesser einer kreisrunden Scheibe eines Varistors von 60 mm, einer Dicke von 1,2 mm, einem Radius der metallischen Belegung Ra von 28,62 mm ist der metallfreie Rand zwischen dem äu-

EP 0 243 602 B1

ßeren Umfang der metallischen Belegung und der Umfangsfläche der Scheibe 1,38 mm breit. Für ein solches Bauelement ist ein ringförmiges Stromzuführungselement vorgesehen, dessen äußerer Radius ra 21 mm dessen innerer Radius $r_i$ 18 mm und dessen Dicke 0,5 mm betragen.

Bei diesen Abmessungen wird das Verhältnis zwischen äußerem Umfang Ua und innerem Umfang Ui bzw. der äußeren Elektrodenfläche Fa und der inneren Elektrodenfläche Fi von 1,167 gewahrt und liegt damit zwischen den angegebenen Grenzwerten.

Die Erfindung wird nachfolgend anhand der beigefügten Figuren näher erläutert. Es zeigen

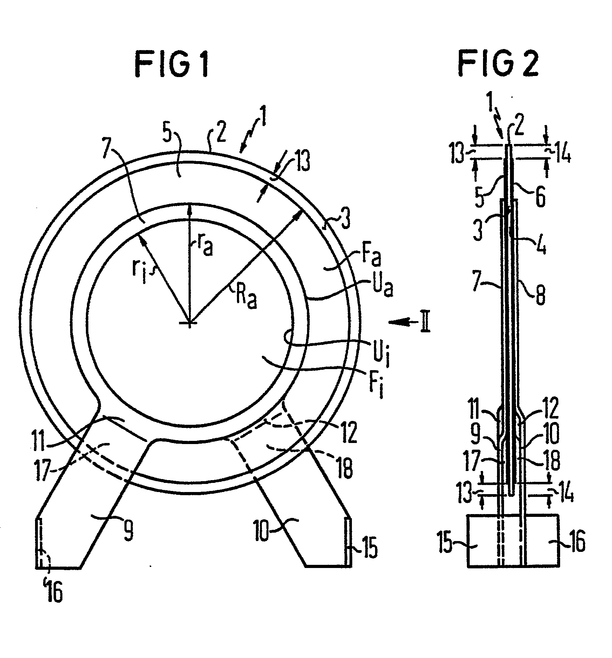

Fig. 1 ein scheibenförmiges Bauelement in Draufsicht und
Fig. 2 das Bauelement gemäß Fig. 1 als Ansicht in Richtung des Pfeiles II in Fig. 1.

In den Figuren sind für gleiche Teile gleiche Bezugszeichen verwendet.

Der scheibenförmige keramische Körper 1 ist auf seinen beiden Stirnflächen 3 und 4 mit Belegungen 5 und 6 versehen, beispielsweise aus Einbrennsilber, die nicht bis zur Umfangsfläche 2 des Körpers 1 reichen und zwischen ihrem Rand und der Umfangsfläche 2 Freiflächen 13 und 14 freilassen.

Auf beiden Belegungen 5 und 6 sind kreisringförmige Stromzuführungselemente 7 und 8 mittig angelötet, d.h., daß der Mittelpunkt des scheibenförmigen Körpers 1 und der Mittelpunkt der ringförmigen Stromzuführungselemente zusammenfallen.

Der Radius Ra der metallischen, lötfähigen Belegungen 5 und 6 ist so bemessen, daß jeweils eine außerhalb der Stromzuführungselemente 7 und 8 befindliche Fläche Fa der Belegungen 5 bzw. 6 resultiert.

Die Differenz zwischen dem äußeren Radius $r_a$ und dem inneren Radius $r_i$ des Stromzuführungselementes 7 bzw. 8 bestimmt einerseits die Breite der ringförmigen Stromzuführungselemente und andererseits das Verhältnis zwischen dem äußeren Umfang Ua und dem inneren Umfang Ui desselben.

Die außerhalb des Stromzuführungselementes 7 bzw. 8 befindliche Fläche Fa der Belegung 5 bzw. 6 soll gemäß der Erfindung zur inneren Fläche Fi im gleichen Verhältnis stehen, wie der äußere Umfang Ua zum inneren Umfang Ui des Stromzuführungselementes 7 bzw. 8.

Die Stromzuführungselemente 7 bzw. 8 sind mit Zuleitungslaschen 9 bzw. 10 versehen, die durch Abknickungen 11 bzw. 12 am äußeren Umfang Ua der Stromzuführungselemente 7 bzw. 8 soweit von der Oberfläche der Belegungen 5 bzw 6 abgehoben, daß sie Freiräume 17 bzw. 18 bilden, wobei diese Freiräume nicht mit Lot verbunden sind.

An den Zuleitungslaschen 9 und 10 sind Lötfahnen 15 bzw. 16 vorgesehen, die zum Verbinden der Zuleitungslaschen mit den Armaturen des Gerätes dienen, das mit einem Varistor, wie im vorliegenden Fall, oder mit einem PTC-Widerstand einem NTC-Widerstand, oder einem keramischen Kondensator versehen werden soll.

**Patentansprüche**

1. Elektrisches Bauelement mit hoher Festigkeit bei Beanspruchung durch Temperaturwechsel und durch Stoßströme, das aus einem keramisch hergestellten, gesinterten Körper (1) mit kreisrundem, rechteckigem oder quadratischem Querschnitt besteht, insbesondere ein spannungsabhängiger elektrischer Widerstand (Varistor) aus durch Dotierung halbleitendem Zinkoxid-Material, dessen Stirnflächen (3, 4) nicht bis zu seiner Umfangsfläche (2) reichende lötfähige Belegungen (5, 6) als Elektroden enthalten, an denen ringförmige Stromzuführungselemente (7, 8) mittig angelötet sind, **dadurch gekennzeichnet, daß** jedes Stromzuführungselement (7, 8) aus einem geschlossenen Streifen besteht, der auf der Belegung (5, 6) eine außerhalb liegende Fläche (Fa) und eine innerhalb liegende Fläche (Fi) freiläßt, aus lötfähigem Metall besteht, eine Dicke von 0,2 bis 1 mm aufweist und dessen Breite so bemessen ist, daß die Bedingung

$$\frac{Fa}{Fi} = \frac{Ua}{Ui} = 1,05 \text{ bis } 1,35$$

erfüllt ist, wobei
Fa die außerhalb des Stromzuführungselementes (7, 8) befindliche Fläche der Belegung (5, 6),
Fi die innerhalb des Stromzuführungselementes (7, 8) befindliche Fläche der Belegung (5, 6),
Ua den äußeren Umfang des Stromzuführungselementes (7, 8) und
Ui den inneren Umfang des Stromzuführungselementes (7, 8) bedeuten,
und daß jedes Stromzuführungselement (7, 8) mit einer Zuleitungslasche (9, 10) versehen ist, die durch Abknickungen (11, 12) am äußeren Umfang (Ua) des Stromzuführungselementes (7, 8) von der Oberfläche der Belegung (5, 6) einen Freiraum (17, 18) bildend so weit abgehoben ist, daß sie an der Belegung (5, 6) nicht angelötet ist.

2. Elektrisches Bauelement nach Anspruch 1,
**dadurch gekennzeichnet, daß** das Verhältnis Fa : Fi = Ua : Ui = 1,1 bis 1, 2 beträgt.

3. Elektrisches Bauelement nach Anspruch 1 oder 2,

4

**dadurch gekennzeichnet**, daß bei einem kreisrunden Körper (1) die Stromzuführungselemente (7, 8) kreisringförmig sind.

4. Elektrisches Bauelement nach Anspruch 1 oder 2,
**dadurch gekennzeichnet**, daß bei einem Körper (1) mit rechteckigem oder quadratischem Querschnitt die Stromzuführungselemente (7, 8) als kreisringförmiger, rechteckiger oder quadratischer Rahmen ausgebildet sind.

5. Elektrisches Bauelement nach einem der Ansprüche 1 bis 4,
**dadurch gekennzeichnet**, daß die Stromzuführungselemente (7, 8) aus einem nicht lötfähigen Metall bestehen und mit einem lötfähigen Überzug versehen sind.

6. Elektrisches Bauelement nach einem der Ansprüche 1 bis 5,
**dadurch gekennzeichnet**, daß die Stromzuführungselemente (7, 8) mit den Stromzuführungslaschen (9, 10) einstückig aus einem entsprechendem Blech ausgestanzt sind.

**Claims**

1. Electric component with high resistance to loading by temperature change and by impulse currents, which consists of a ceramically produced, sintered body (1) having a circular, rectangular or square cross-section, especially a non-linear electrical resistor (varistor), made of zinc oxide material made semi-conducting by doping, the end faces (3, 4) of which contain as electrodes solderable coatings (5, 6), which do not reach as far as its circumferential surface (2), and on which there are soldered centrally ring-shaped current supply elements (7, 8), characterized in that each current supply element (7, 8) consists of a closed strip which leaves free on the coating (5, 6) an area (Fa) lying outside and an area (Fi) lying inside, consists of solderable metal, has a thickness of 0.2 to 1 mm, and whose width is dimensioned so that the condition

$$\frac{Fa}{Fi} = \frac{Ua}{Ui} = 1.05 \text{ to } 1.35$$

is fulfilled,

Fa being the area of the coating (5, 6) located outside the current supply element (7, 8)

Fi being the area of the coating (5, 6) located inside the current supply element (7, 8)

Ua being the external circumference of the current supply element (7, 8), and

Ui being the internal circumference of the current supply element (7, 8),

and in that each current supply element (7, 8) is provided with a feeder tongue (9, 10), which, by virtue of kinks (11, 12) on the outer circumference (Ua) of the current supply element (7, 8), is raised, forming a clearance (17, 18) from the surface of the coating (5, 6), so far that it is not soldered to the coating (5, 6).

2. Electric component according to Claim 1, characterized in that the ratio Fa : Fi = Ua : Ui = 1.1 to 1.2.

3. Electric component according to Claim 1 or 2, characterized in that for a circular body (1) the current supply elements (7, 8) are annular.

4. Electric component according to Claim 1 or 2, characterized in that for a body (1) with a rectangular or square cross-section the current supply elements (7, 8) are formed as annular, rectangular or square frames. 5. Electric component according to one of Claims 1 to 4, characterized in that the current supply elements (7, 8) consist of a non-solderable metal, and are provided with a solderable coating.

6. Electric component according to one of Claims 1 to 5, characterized in that the current supply elements (7, 8) are stamped out with the current supply tongues (9, 10) from an appropriate sheet of metal.

**Revendications**

1. Composant électrique à haute tenue aux chocs thermiques et aux courants de choc, formé d'un corps (1) fritté fabriqué avec une ou plusieurs céramiques, présentant une section circulaire, rectangulaire ou carrée, en particulier résistance électrique variable avec la tension (varistance) en matériau à base d'oxyde de zinc rendu semi-conducteur par dopage, dont les faces opposées (3, 4) comportent des revêtements soudables (5, 6) qui ne s'étendent pas jusqu'à la surface périphérique (2) du corps et qui servent d'électrodes, auxquels sont soudés, concentriquement, des éléments d'amenée de courant (7, 8) de forme annulaire, caractérisé en ce que chaque élément d'amenée de courant (7, 8) est constitué d'une bande fermée qui laisse libre, sur le revêtement (5, 6) une surface (Fa) située à l'extérieur et une surface (Fi) située à l'intérieur, élément d'amenée de courant qui est en métal soudable, possède une épaisseur de 0, 2 à 1 mm et dont la largeur est choisie de manière que soit satisfaite la relation

EP 0 243 602 B1

$$\frac{Fa}{Fi} = \frac{Ua}{Ui} = 1,05 \text{ à } 1,35$$

dans laquelle

Fa est la surface du revêtement (5, 6) située à l'extérieur de l'élément d'amenée de courant (7, 8),

Fi est la surface du revêtement (5, 6) située à l'intérieur de l'élément d'amenée de courant (7, 8),

Ua est la circonférence externe de l'élément d'amenée de courant (7, 8) et

Ui est la circonférence interne de l'élément d'amenée de courant (7, 8),

et que chaque élément d'amenée de courant (7, 8) est pourvu d'une patte d'amenée (9, 10) qui est écartée de la surface du revêtement (5, 6) par des repliages (11, 12) sur le pourtour extérieur (Ua) de l'élément d'amenée de courant (7, 8), avec formation d'un espace libre (17, 18), à tel point que la patte n'est pas soudée au revêtement (5, 6).

2. Composant selon la revendication 1, caracté-risé en ce que le rapport Fa : fi = Ua : Ui = 1, 1 à 1, 2.

3. Composant selon la revendication 1 ou 2, caractérisé en ce que les éléments d'amenée de courant (7, 8) sont en anneau circulaire au cas où le corps (1) est circulaire.

4. Composant selon la revendication 1 ou 2, caractérisé en ce que les éléments d'amenée de courant (7, 8) sont réalisés comme un cadre en anneau circulaire, rectangulaire ou carré au cas où le corps (1) possède une section droite rectangulaire ou carrée.

5. Composant selon une des revendications 1 à 4, caractérisé en ce que les éléments d'amenée de courant (7, 8) sont réalisés d'un métal non soudable et sont pourvus d'un revêtement soudable.

6. Composant selon une des revendications 1 à 5, caractérisé en ce que les éléments d'amenée de courant (7, 8) et les pattes d'amenée de courant (9, 10) sont découpés d'un seul tenant dans une tôle adéquate.

6

# FIG 1

# FIG 2